# EUROPEAN PATENT SPECIFICATION

(11) **EP 3 342 887 B1**
(45) Date of publication and mention of the grant of the patent: **04.03.2020**
(21) Application number: 16841237.7
(22) Date of filing: 16.06.2016
(51) Int. Cl.: C22B 59/00, C01F 17/00, C22B 3/08, C22B 3/44

(54) **SCANDIUM OXIDE MANUFACTURING METHOD**
VERFAHREN ZUR HERSTELLUNG VON SCANDIUMOXID
PROCÉDÉ DE FABRICATION D'OXYDE DE SCANDIUM

(30) Priority: 28.08.2015 JP 2015169281
(43) Date of publication of application: 04.07.2018
(73) Proprietor: Sumitomo Metal Mining Co., Ltd., Tokyo 105-8716 (JP)
(72) Inventor: MATSUMOTO, Shin-ya, Niihama-shi Ehime 792-0002 (JP); KOBAYASHI, Hiroshi, Niihama-shi Ehime 792-0002 (JP); NAGAI, Hidemasa, Niihama-shi Ehime 792-0002 (JP); HIGAKI, Tatsuya, Niihama-shi Ehime 792-0002 (JP)
(74) Representative: Jones, Nicholas Andrew
(86) International application number: PCT/JP2016/067983
(87) International publication number: WO 2017/038205

(56) References cited:
- WO-A1-89/05282
- WO-A1-2015/115269
- GB-A- 1 553 651
- JP-A- H09 194 211
- JP-A- 2014 218 719
- US-A1- 2012 204 680
- E.L. HEAD ET AL: "The thermal decomposition of scandium formate and oxalate", JOURNAL OF INORGANIC AND NUCLEAR CHEMISTRY, vol. 26, no. 4, 1 April 1964 (1964-04-01), pages 525-530, XP055540679, ISSN: 0022-1902, DOI: 10.1016/0022-1902(64)80284-0

## Description

### TECHNICAL FIELD

The present invention relates to a method for producing scandium oxide, and more particularly, it relates to a method for producing scandium oxide by which scandium oxide having a suppressed sulfur content can be produced from scandium oxalate containing a sulfur component as an impurity.

Scandium is extremely useful as an additive of a high strength alloy and an electrode material of a fuel cell. However, scandium is not widely used because of a low production quantity and high price thereof.

Incidentally, scandium is contained in nickel oxide ores such as a laterite ore and a limonite ore in a small amount. However, nickel oxide ore has not been industrially utilized as a raw material of nickel for a long time since the grade of nickel contained therein is low. Hence, it has also been scarcely studied to industrially recover scandium from a nickel oxide ore.

However, in recent years, an HPAL process has been put into practical use in which a nickel oxide ore is charged into a pressurized vessel together with sulfuric acid and heated at a high temperature of about from 240°C to 260°C to be separated into a leachate containing nickel and a leach residue. In this HPAL process, impurities are separated by adding a neutralizing agent to the leachate thus obtained and nickel can be subsequently recovered as nickel sulfide by adding a sulfurizing agent to the resulting leachate. Thereafter, electric nickel or a nickel salt compound can be obtained by treating the nickel sulfide thus obtained by an existing nickel smelting process.

In the case of using the HPAL process as described above, scandium contained in the nickel oxide ore is contained in the leachate together with nickel (see Patent Document 1). Moreover, scandium is contained in an acidic solution (liquid after sulfurization) after addition of a sulfurizing agent while a neutralizing agent is added to the leachate obtained in the HPAL process to separate impurities and a sulfurizing agent is subsequently added to the resulting leachate to recover nickel as nickel sulfide, and nickel and scandium can be thus effectively separated from each other by using the HPAL process.

As a method of recovering scandium from the acidic solution described above, a method has been proposed in which scandium is recovered by being adsorbed to a chelate resin to be separated from impurities and being concentrated (see Patent Document 2).

Meanwhile, a method of recovering scandium from an acidic solution obtained by a wet smelting treatment of a nickel oxide ore by a solvent extraction treatment has also been proposed (see Patent Document 3). In this method described in Patent Document 3, first, an organic solvent obtained by diluting 2-ethylhexylsulfonic acid-mono-2-ethylhexyl with kerosene is added to a scandium-containing solution of an aqueous phase containing at least one or more kinds of iron, aluminum, calcium, yttrium, manganese, chromium, or magnesium in addition to scandium and the scandium component is extracted into the organic solvent. Subsequently, in order to separate yttrium, iron, manganese, chromium, magnesium, aluminum, and calcium which have been extracted into the organic solvent together with scandium, these are removed by adding an aqueous solution of hydrochloric acid to the organic solvent and conducting scrubbing, then an aqueous solution of NaOH is added to the organic solvent to convert scandium contained in the organic solvent into a slurry containing Sc(OH)₃, and Sc(OH)₃ obtained by filtering this is dissolved in hydrochloric acid to obtain an aqueous solution of scandium chloride. Thereafter, oxalic acid is added to the aqueous solution of scandium chloride thus obtained to obtain a precipitation of scandium oxalate, this precipitation is filtered to separate iron, manganese, chromium, magnesium, aluminum, and calcium into the filtrate, the resultant precipitation is then calcined in an air atmosphere, and scandium oxalate is heated and oxidized to obtain scandium oxide.

However, in the case of applying the refinement process using such solvent extraction to recovery of scandium from the liquid after sulfurization, it is disadvantageous from the viewpoint of industrial economic efficiency. The reason for this is that the amount of scandium contained in the nickel oxide ore is extremely small and the amount of liquid to be handled is enormous while the scandium concentration in the slurry is only about several to several tens of mg/l at the slurry concentration determined by the amount of sulfuric acid added for extraction of nickel.

In other words, when the solvent extraction is applied to such an acidic solution as it is, the loss in association with the elution of extracting agent into the solution to be extracted, namely, the aqueous phase cannot be ignored and it takes cost for replenishment of extracting agent and labor and cost required to remove organic components such as and COD in the wastewater. In addition, the investment in plant and equipment such as expansion of the scale of equipment due to handling of an enormous amount of liquid also increases. Furthermore, there are some nickel oxide ores which contain, for example, iron, calcium, aluminum, and the like in large amounts, but it is concerned that such metals adversely affect the stability of operation since the metals are likely to form clad with the extracting agent to be used for solvent extraction.

Hence, there is a method for separating impurities by combining the advantages of the ion exchange and solvent extraction described above (see Patent Document 4). Specifically, this method is a method in which an eluate obtained by adsorbing scandium contained in a liquid after sulfurization to a chelate resin is subjected to solvent extraction. It is possible to efficiently recover scandium having a high grade from a nickel oxide ore by using such a method. However, it is impossible to decrease the grade of sulfur in scandium oxide to from several tens of ppm to about 100 ppm, and there is thus still room for improvement in order to obtain scandium having a higher grade.

US 2012/0204680 discloses a method for producing scandium oxide, wherein a scandium oxide slurry is treated with oxalic acid to precipitate scandium oxalate from it, and the precipitated oxalate is passed through a Nütsche filter to produce a filter cake. The filter cake is then treated in a tray oven to thermally decompose the oxalate and to remove the hydrocarbon content from it, thus yielding scandium oxide.

Incidentally, it is considered that sulfur contained in scandium is derived from sulfuric acid to be used for leaching of a nickel oxide ore of a raw material and a sulfate radical contained in slaked lime to be used for neutralization of a solution. In other words, gypsum (CaSO₄·2H₂O) remaining in scandium oxalate is not separated when scandium oxalate is roasted to scandium oxide, and as a result, the grade of sulfur in scandium oxide increases. The gypsum is in a stable form and it is difficult to completely remove gypsum by washing it from the outer surface in a case in which gypsum is generated inside the scandium oxide crystal.

It is regarded that the presence of sulfur is not a serious problem depending on the application of scandium, but there are specifications which require strict suppression of sulfur, for example, in applications such as an electrolyte of a fuel cell, and it has not been possible to obtain performance satisfying such specifications.

As described above, it has not been easy to obtain high purity scandium oxide having a low grade of impurities, particularly sulfur, by using the conventional method.
Patent Document 1: Japanese Unexamined Patent Application, Publication No. 2005-350766
Patent Document 2: Japanese Unexamined Patent Application, Publication No. H09-194211
Patent Document 3: Japanese Unexamined Patent Application, Publication No. H09-291320
Patent Document 4: Japanese Unexamined Patent Application, Publication No. 2014-218719

### DISCLOSURE OF THE INVENTION

### Problems to be Solved by the Invention

The present invention has been made in view of the above circumstances, and an object thereof is to provide a method for producing scandium oxide by which scandium oxide having a suppressed content of a sulfur component can be produced when obtaining scandium oxide from scandium oxalate containing a sulfur-containing compound as an impurity.

### Means for Solving the Problems

The inventors of the present invention have conducted extensive studies in order to solve the above-mentioned problems, and as a result, it has been found out that a sulfur-containing compound contained in scandium oxalate is removed and scandium oxide having a suppressed sulfur content can be produced by subjecting scandium oxalate containing a sulfur-containing compound as an impurity to a heat treatment in an atmosphere containing a carbon source, thereby completing the present invention. In other words, the present invention provides the following.
(1) The present invention is a method for producing scandium oxide, which includes heating scandium oxalate containing a sulfur-containing compound as an impurity in an oxygen-containing atmosphere in a state of containing a carbon source together with the scandium and wherein an amount of oxygen present at the time of the heating is less than an amount required to oxidize all carbon atoms contained in the carbon source to carbon dioxide.
(2) In addition, the present invention is the method for producing scandium oxide according to (1) or (2), in which the scandium oxalate is a precipitate obtained by adding oxalic acid to a solution which contains scandium and exhibits acidity by sulfuric acid.
(3) In addition, the present invention is the method for producing scandium oxide according to (3), in which the solution which exhibits acidity by sulfuric acid is a solution obtained by adding a neutralizing agent to a leachate obtained by leaching a nickel oxide ore with sulfuric acid.

### Effects of the Invention

According to the present invention, it is possible to suppress the sulfur content in scandium oxide to be obtained and to produce scandium oxide having a far higher purity by heating scandium oxalate containing a sulfur-containing compound as an impurity in an atmosphere containing a carbon source.

### BRIEF DESCRIPTION OF THE DRAWINGS

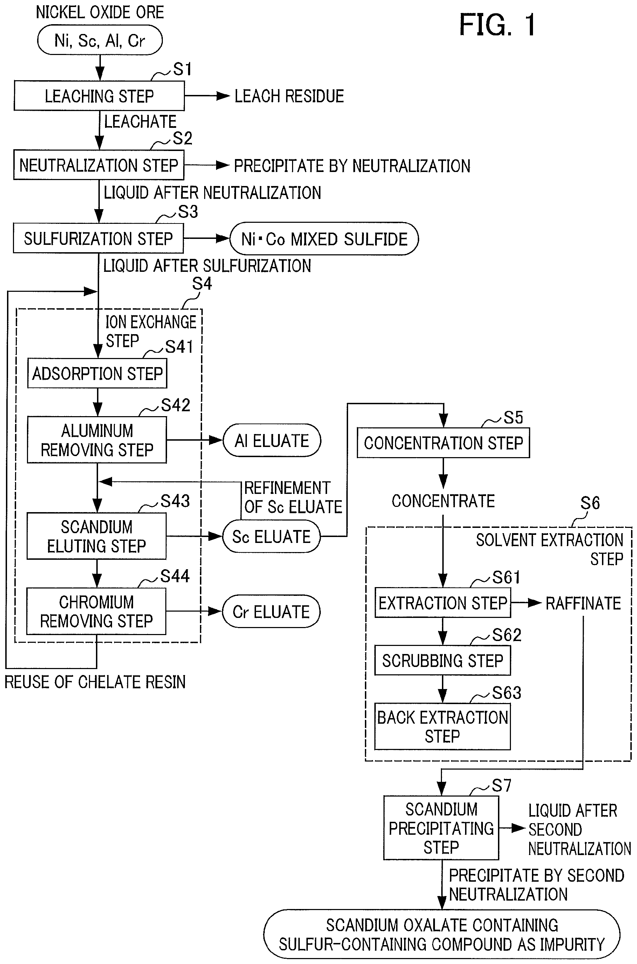

Fig. 1 is a diagram for explaining an example of a method for preparing scandium oxalate of a raw material.

### PREFERRED MODE FOR CARRYING OUT THE INVENTION

Hereinafter, specific embodiments of the present invention (hereinafter referred to as the "present embodiment") will be described in detail, but the present invention is not limited to the following embodiments at all.

### <<1. Method for Producing Scandium Oxide>>

In the method for producing scandium oxide according to the present embodiment, scandium oxalate containing a sulfur-containing compound as an impurity is heated (roasted) to be converted into scandium oxide and the heating is conducted in an oxygen-containing atmosphere in a state in which a carbon source is present.

As described above, reactions represented by the following Formulas (1) to (3) take place by heating scandium oxalate containing a sulfur-containing compound as an impurity in a state of containing a carbon source together with the scandium oxalate. Incidentally, a case in which the sulfur-containing compound contained in scandium oxalate as an impurity is calcium sulfate and the carbon source is carbon is described here as an example.

Sc₂(C₂O₄)₃·2H₂O → Sc₂O₃ + 3CO₂ + 3CO + 2H₂O ··· (1)

2C + 3/2O₂ → CO + CO₂ ··· (2)

CaSO₄ + CO → CaO + SO₂ + CO₂ ··· (3)

Specifically, scandium oxalate is decomposed into scandium oxide, carbon monoxide, and carbon dioxide by being heated as represented by Formula (1) above. Meanwhile, carbon contained together with scandium oxalate is oxidized to carbon monoxide and carbon dioxide as represented by Formula (2) above. Particularly, it is considered that the "Boudouard's equilibrium" state that CO production is dominant as compared to CO₂ production is obtained in the heating (roasting) at a high temperature. Subsequently, carbon monoxide generated by the reactions represented by Formulas (1) and (2) reacts with calcium sulfate contained in scandium oxalate as an impurity to generate calcium oxide and sulfur dioxide as represented by Formula (3) above. By such a reaction, the sulfur element which is contained in scandium oxalate and is to be removed is removed as sulfur dioxide of a gas under the heating conditions.

Meanwhile, in the conventional method for producing scandium oxide, a roasting treatment of scandium oxalate has been conducted in an atmosphere containing oxygen without adding a carbon source. Specifically, it is considered that the reaction represented by the following Formula (4) takes place in the conventional method.

Sc₂(C₂O₄)₃·2H₂O + 3/2O₂ → Sc₂O₃ + 6CO₂ + 2H₂O ··· (4)

In the conventional roasting treatment, carbon monoxide is not generated, thus this calcium sulfate is not involved in the reaction of roasting even when a sulfur-containing compound such as calcium sulfate is present in the system as an impurity, and sulfur remains in scandium oxide generated as it is as an impurity in this manner.

On the contrary, in the production method according to the present embodiment, carbon monoxide is supplied in an amount so that the reaction represented by Formula (3) above sufficiently proceeds as not only carbon monoxide generated by decomposition of scandium oxalate by the reaction represented by Formula (1) above but also carbon monoxide generated by oxidation of carbon by the reaction represented by Formula (2) above. Moreover, the sulfur component contained in scandium oxalate can be removed by the carbon monoxide as a result. This makes it possible to suppress the retention of sulfur in scandium oxide to be generated through the reaction represented by Formula (3) above and to produce scandium oxide having a suppressed sulfur content.

### <Carbon Source>

The carbon source is not particularly limited as long as it contains carbon and generates carbon monoxide by combustion. Specifically, carbon, bamboo, coal, coke, sugar, and the like can be used as the carbon source.

In addition, those having a small content of impurity elements other than carbon are preferable as the carbon source, and among these, it is preferable to use high purity carbon since it has advantages that the grade of carbon is high and a waste crucible can be reused.

### <Heat Treatment>

The heat treatment is not particularly limited, but for example, it can be conducted by using various kinds of heating furnaces such as a tube furnace or an atmospheric furnace.

The atmosphere for the heat treatment is not particularly limited as long as it is an atmosphere containing oxygen. It is preferable that the atmosphere is set to an air atmosphere by blowing the air of an oxygen-containing gas into the heating furnace from the viewpoint of economic efficiency and the like.

The amount of oxygen in the atmosphere at the time of the heat treatment is less than the amount required to oxidize all the carbon atoms contained in the carbon source to carbon dioxide from the viewpoint of suppressing excessive oxidation of carbon, maintaining the "Boudouard's equilibrium" state, and thus preferentially generating carbon monoxide to be involved in the reaction represented by Formula (3).

Incidentally, in the adjustment of the amount of oxygen as described above, the amount of oxygen may be adjusted in consideration of the amounts of oxygen atoms and carbon atoms contained in the entire system such as oxygen atoms and carbon atoms contained in scandium oxide and oxygen atoms contained in the carbon source in a case in which the amount of scandium oxide used is sufficiently large with respect to the amount of carbon source used, in the case of using a carbon source containing a large amount of oxygen atoms, and the like.

In the case of conducting the heat treatment in an oxygen-containing gas atmosphere as described above, the oxygen-containing gas may or may not be allowed to flow into the heating furnace. For example, in the case of allowing the oxygen-containing gas to flow into the heating furnace, the flow rate of the oxygen-containing gas is not particularly limited, but it is preferably 0.5 L/min or more, more preferably 0.8 L/min or more, and still more preferably 1 L/min or more. The reaction represented by Formula (2) can efficiently proceed as the oxygen-containing gas flows at such a flow rate. Meanwhile, the flow rate of the oxygen-containing gas is preferably 2 L/min or less and more preferably 1.5 L/min or less. When the flow rate of the oxygen-containing gas is too great, not only the effect corresponding to the flow rate cannot be obtained but also the cost increases in association with an increase in the consumption amount of the oxygen-containing gas flowed.

The heating temperature is not particularly limited, but it is preferably 900°C or higher, more preferably 1000°C or higher, and still more preferably 1100°C or higher in order to promote the decomposition reaction of scandium oxalate represented by Formula (1) above and to generate carbon monoxide required for the reaction represented by Formula (2) above in a shorter time. Meanwhile, the upper limit of the heating temperature is preferably 1300°C or lower and more preferably 1200°C or lower. When the heating temperature is too high, the cost for raising the temperature increases and an efficient treatment cannot be conducted. Incidentally, the "heating temperature" in the present specification refers to the final holding temperature.

The heating time (holding time) is not particularly limited, and it may be appropriately adjusted depending on the amount to be treated and the like, but it is preferably 0.5 hours or longer and more preferably 1 hour or longer in order to sufficiently conduct the reaction represented by Formula (2) above and thus to remove the sulfur component. Meanwhile, the upper limit of the heating time is preferably 6 hours or shorter and more preferably 3 hours or shorter in order to prevent an increase in cost in association with an increase in the heating time. Incidentally, the "heating time" in the present specification refers to the holding time at the heating temperature described above.

Incidentally, the time and rate of temperature rise in the heat treatment are not particularly limited, and these can be appropriately set depending on the apparatus, the facility, and the like.

### <<2. Method for Producing Scandium Oxalate>>

Next, an example of a method for producing scandium oxalate to be a raw material in the method for producing scandium oxide of the present embodiment will be described. Fig. 1 is a flow chart for explaining an example of the method for producing scandium oxalate to be a raw material, namely, scandium oxalate containing a sulfur-containing compound as an impurity.

As an example is illustrated in Fig. 2, scandium oxalate can be obtained by, for example, removing impurities from a solution which exhibits acidity by sulfuric acid and is obtained by wet smelting of a nickel oxide ore containing components such as aluminum and chromium in addition to valuable metals such as nickel and scandium, concentrating scandium in the solution thus obtained, and adding oxalic acid to the concentrated solution.

Incidentally, examples of the sulfur-containing compound contained in scandium oxalate to be a raw material may include calcium sulfate or a mixture containing these as a main component. In the production of scandium oxalate illustrated in Fig. 2, for example, gypsum can be contained in the nickel oxide ore. In addition, calcium sulfate is generated, for example, as a calcium ion to be supplied from calcium carbonate, slaked lime, and the like to be added in the neutralization step S2 and the concentration step S5 in the wet smelting process of a nickel oxide ore reacts with a sulfate ion in the solution which exhibits acidity by sulfuric acid and is obtained by the wet smelting process. The sulfur-containing compound is generated in the course of producing scandium oxalate and contained in scandium oxalate thus obtained at a predetermined proportion in this manner.

Specifically, the method for producing scandium oxalate to be a raw material can include a leaching step S1 of leaching a nickel oxide ore containing scandium with sulfuric acid at a high temperature and a high pressure to obtain a leachate and a leach residue, a neutralization step S2 of adding a neutralizing agent to the leachate to obtain a precipitate by neutralization and a liquid after neutralization, a sulfurization step S3 of adding a sulfurizing agent to the liquid after neutralization to obtain nickel sulfide and a liquid after sulfurization, an ion exchange step S4 of adsorbing scandium to a chelate resin by bringing the liquid after sulfurization into contact with the chelate resin to obtain a scandium eluate, a scandium concentration step S5 of concentrating scandium in the eluate, a solvent extraction step S6 of extracting and separating impurity elements from the concentrate to obtain an extracted and separated liquid, and a scandium precipitating step S7 of adding oxalic acid to the extracted and separated liquid to generate a precipitation of scandium oxalate.

Incidentally, the ion exchange step S4, the concentration step S5, and the solvent extraction step S6 are provided for the purpose of concentrating scandium and obtaining a concentrate having far higher purity as to be described later, and the method can also be carried out in an aspect which does not include these steps. For example, the liquid after sulfurization obtained in the sulfurization step S3 can be directly subjected to the scandium precipitating step S7.

Hereinafter, with reference to the flow chart illustrated in Fig. 2, the respective steps of the method for producing scandium oxalate will be described in more detail.

### <Leaching Step>

In the leaching step S1, a nickel oxide ore containing scandium is charged into a high-temperature pressurized vessel (autoclave) or the like together with sulfuric acid, the leaching treatment of the nickel oxide ore using sulfuric acid is conducted while stirring the mixture in an environment of a high temperature of from 240°C to 260°C and a high pressure to generate a leach slurry containing a leachate and a leach residue. Incidentally, the treatment in the leaching step S1 may be conducted in accordance with the conventionally known HPAL process, and the HPAL process is described in, for example, Patent Document 1.

Here, examples of the nickel oxide ore may mainly include a limonite ore and a so-called laterite ore such as a saprolite ore. The nickel content in the laterite ore is usually from 0.8% to 2.5% by weight, and nickel is contained as a hydroxide or a magnesium silicate mineral. These nickel oxide ores contain components such as aluminum, chromium, and iron in large amounts in addition to valuable metals such as nickel, cobalt, and scandium.

Incidentally, a nickel oxide ore contains other minerals including gypsum and a calcium ion in small amounts and these gypsum and calcium ions are contained in the leachate by the leaching treatment in some cases.

In this leaching step S1, the leach slurry which is thus obtained and contains the leachate and the leach residue is separated into a leachate containing nickel, cobalt, scandium, and the like and a leach residue of hematite while being washed. In this solid-liquid separation treatment, for example, the leach slurry is mixed with a washing liquid and then subjected to the solid-liquid separation treatment using an aggregating agent to be supplied from an aggregating agent supplying facility or the like by using a solid-liquid separation facility such as a thickener. Specifically, first, the leach slurry is diluted with the washing liquid and the leach residue in the slurry is then concentrated as a sediment in the thickener. Incidentally, in this solid-liquid separation treatment, it is preferable to connect and use the solid-liquid separation tanks such as thickeners in multiple stages and to conduct the solid-liquid separation while washing the leach slurry in multiple stages.

### <Neutralization Step>

In the neutralization step S2, a neutralizing agent is added to the leachate obtained in the leaching step S1 described above to adjust the pH and to obtain a precipitate by neutralization containing impurity elements and a liquid after neutralization. By the neutralization treatment in this neutralization step S2, valuable metals such as scandium and nickel are contained in the liquid after neutralization and most of the impurities including iron and aluminum form precipitates by neutralization.

As the neutralizing agent, conventionally known ones can be used, and examples thereof may include calcium carbonate and slaked lime.

Here, the calcium ion supplied from the alkali such as calcium carbonate and slaked lime reacts with the sulfate ion in the solution which exhibits acidity by sulfuric acid to form calcium sulfate and the calcium sulfate is mixed into scandium oxalate to be obtained through the subsequent steps as impurities in some cases.

In the neutralization treatment in the neutralization step S2, it is preferable to adjust the pH to be in a range of from 1 to 4 and it is more preferable to adjust the pH to be in a range of from 1.5 to 2.5 while suppressing oxidation of the separated leachate. There is a possibility that the neutralization insufficiently proceeds and the mixture cannot be separated into a precipitate by neutralization and a liquid after neutralization when the pH is lower than 1. Meanwhile, there is a possibility that not only impurities including aluminum but also valuable metals such as scandium and nickel are contained in the precipitate by neutralization when the pH exceeds 4.

### <Sulfurization Step>

In the sulfurization step S3, a sulfurizing agent is added to the liquid after neutralization obtained in the neutralization step S2 to obtain nickel sulfide and a liquid after sulfurization. By the sulfurization treatment in this sulfurization step S3, nickel, cobalt, zinc, and the like are converted into sulfides and scandium and the like are contained in the liquid after sulfurization.

Specifically, in this sulfurization step S3, a sulfurizing agent such as hydrogen sulfide gas, sodium sulfide, sodium hydride sulfide, or the like is added to the liquid after neutralization obtained to generate a sulfide (nickel·cobalt mixed sulfide) containing nickel, cobalt, and small amounts of impurity components and a liquid after sulfurization which contains scandium and the like and has a nickel concentration stabilized at a low level.

In the sulfurization treatment in the sulfurization step S3, the slurry of the nickel·cobalt mixed sulfide is subjected to a sedimentation treatment using a sedimenting apparatus such as thickener to separate and recover the nickel·cobalt mixed sulfide from the bottom of the thickener and the liquid after sulfurization of an aqueous solution component is allowed to overflow and recovered.

### <Ion Exchange Step>

In the ion exchange step S4, scandium contained in the liquid after sulfurization is adsorbed to a chelate resin by bringing the liquid after sulfurization obtained by the wet smelting treatment of a nickel oxide ore described above into contact with the chelate resin to obtain a scandium eluate from which impurity components have been removed.

The aspect of the ion exchange step S4 is not particularly limited, but it is preferable that the ion exchange step S4 includes an adsorption step S41 of bringing the liquid after sulfurization into contact with a chelate resin to adsorb scandium to the chelate resin, an aluminum removing step S42 of bringing a sulfuric acid solution at 0.1 N or less into contact with the chelate resin to which scandium is adsorbed to remove aluminum adsorbed to the chelate resin in the adsorption step S41, a scandium eluting step S43 of bringing a sulfuric acid solution at 0.3 N or more and 3 N or less into contact with the chelate resin subjected to the aluminum removing step S42 to obtain a scandium eluate, and a chromium removing step S44 of bringing a sulfuric acid solution at 3 N or more into contact with the chelate resin subjected to the scandium eluting step S43 to remove chromium adsorbed to the chelate resin in the adsorption step S41, for example, as an example is illustrated in Fig. 2.

### [Adsorption Step]

In the adsorption step S41, the liquid after sulfurization is brought into contact with a chelate resin to adsorb scandium to the chelate resin. The chelate resin is not particularly limited, but it is preferable to use, for example, a resin having iminodiacetic acid as a functional group.

### [Aluminum Removing Step]

In the aluminum removing step S42, a sulfuric acid solution at 0.1 N or less is brought into contact with the chelate resin to which scandium is adsorbed in the adsorption step S41 to remove aluminum adsorbed to the chelate resin in the adsorption step S41. When removing aluminum, it is preferable to maintain the pH of the sulfuric acid solution in a range of 1 or higher and 2.5 or lower and it is more preferable to maintain the pH in a range of 1.5 or higher and 2.0 or lower.

### [Scandium Eluting Step]

In the scandium eluting step S43, a sulfuric acid solution at 0.3 N or more and less than 3 N is brought into contact with the chelate resin subjected to the aluminum removing step S42 to obtain a scandium eluate. When obtaining the scandium eluate, it is preferable to maintain the normality of the sulfuric acid solution to be used as the eluent in a range of 0.3 N or more and less than 3 N and it is preferable to maintain the normality in a range of 0.5 N or more and less than 2 N.

### [Chromium Removing Step]

In the chromium removing step S44, a sulfuric acid solution at 3 N or more is brought into contact with the chelate resin subjected to the scandium eluting step S43 to remove chromium adsorbed to the chelate resin in the adsorption step S41.

### [Iron Removing Step]

In addition, although it is not illustrated, the leachate obtained from a nickel oxide ore contains iron as an impurity in some cases. In this case, it is preferable that a sulfuric acid solution having a normality lower than the normality of the sulfuric acid solution to be used in the aluminum removing step S42 is brought into contact with the chelate resin to which scandium is adsorbed in the adsorption step S41 to remove iron adsorbed to the chelate resin in the adsorption step S41 prior to the aluminum removing step S42. When removing iron adsorbed to the chelate resin, it is preferable to maintain the pH of the sulfuric acid solution in a range of 1 or higher and 3 or lower.

By such an ion exchange treatment, it is possible to obtain a scandium eluate from which various impurity elements such as aluminum and chromium are removed and in which scandium is concentrated. Incidentally, it is possible to increase the concentration of scandium eluate by subjecting the scandium eluate obtained to the treatment in the scandium eluting step S43 again, namely, repeatedly conducting the treatment to bring the scandium eluate obtained into contact with the chelate resin subjected to the aluminum removing step S42. In addition, the chelate resin from which chromium and the like have been removed can be reused in the adsorption step S41 again.

### <Concentration Step>

Next, scandium contained in the scandium eluate can be concentrated by providing a concentration step S5 subsequently to the ion exchange step S4 described above. As the concentration treatment, for example, it is possible to conduct a treatment in which a precipitate of scandium contained in the scandium eluate is generated and separated from impurities and this precipitate is dissolved in a sulfuric acid solution or the like to generate a concentrated liquid to be subjected to solvent extraction in the next step. More specifically, as a method of concentrating scandium in this concentration step S5, namely, a method of generating a precipitate of scandium and separating it from impurities, for example, a hydroxylation and neutralization method can be used.

### [Hydroxylation and Neutralization]

In the hydroxylation and neutralization treatment of the scandium eluate, the pH is adjusted to about 8 or higher and 9 or lower by adding a neutralizing agent of an alkali such as calcium carbonate or slaked lime to the scandium eluate obtained in the ion exchange step S4 described above to conduct the neutralization treatment and to generate a hydroxide precipitation of scandium and a liquid after neutralization containing impurity components.

Here, the calcium ion supplied from the alkali such as calcium carbonate or slaked lime reacts with the sulfate ion in the solution which exhibits acidity by sulfuric acid to form calcium sulfate and the calcium sulfate is mixed into scandium oxalate to be obtained through the subsequent steps as impurities in some cases.

### [Dissolution in Sulfuric Acid]

Next, the precipitate of scandium hydroxide obtained by the hydroxylation and neutralization treatment is dissolved by adding a sulfuric acid solution to the precipitate to generate a sulfuric acid solution of scandium. The sulfuric acid solution of scandium thus obtained is the target of the solvent extraction treatment (starting liquid for extraction) in the solvent extraction step S6 of the next step.

In this manner, by providing the concentration step S5 subsequently to the ion exchange step S4, it is possible to greatly remove the impurities contained in the scandium eluate and to decrease the number of steps according to the ion exchange step S4 and the solvent extraction step S6 of the next step.

### <Solvent Extraction Step>

In the solvent extraction step S6, the concentrated liquid obtained in the concentration step S5 described above is used as a starting liquid for extraction, the starting liquid for extraction is brought into contact with an extracting agent, and a back extracting agent is added to the extraction liquid thus obtained to obtain a back extract containing scandium.

The aspect of the solvent extraction step S6 is not particularly limited, but the solvent extraction step S6 can include an extraction step S61 of mixing the starting liquid for extraction with an organic solvent containing an extracting agent to obtain an organic solvent after extraction and a raffinate, a scrubbing step S62 of mixing a washing solution with this organic solvent after extraction to separate and recover scandium extracted by the extracting agent, and a back extraction step S63 of adding a back extracting agent to the organic solvent after washing to back-extract the impurity elements from the organic solvent after washing and to obtain a back extract, for example, as an example is illustrated in Fig. 2.

### [Extraction Step]

In the extraction step S61, the concentrate of the starting liquid for extraction is mixed with an organic solvent containing an extracting agent to selectively leave scandium in the raffinate by extracting the impurity elements other than scandium into the organic solvent. The extracting agent is not particularly limited and may be determined from the viewpoint of selectivity with respect to scandium, and for example, it is possible to use a solvating extracting agent containing phosphorus, specifically, one having trioctylphosphine oxide (TOPO) as a functional group. Incidentally, at the time of extraction, it is preferable to dilute the extracting agent with a hydrocarbon-based organic solvent or the like for use.

Incidentally, it is also possible to selectively extract scandium into the organic solvent containing an extracting agent depending on the kind of extracting agent to be used in the extraction step 61. In this case, it is possible to subject the back extraction solution to be described later to the scandium precipitating step S7 instead of the raffinate.

### [Scrubbing (Washing) Step]

Although it is not an essential aspect, it is preferable to subject the organic solvent (organic phase) to a scrubbing (washing) treatment to separate scandium into the aqueous phase and thus to remove scandium from the extracting agent before back-extracting the extraction liquid (scrubbing step S62) in a case in which scandium is also slightly contained in the organic solvent into which impurities are extracted in the extraction step S61 described above.

A hydrochloric acid solution and a sulfuric acid solution can be used as the solution (washing solution) to be used for scrubbing. A concentration range of 2.0 mol/L or more and 9.0 mol/L or less is preferable in the case of using a hydrochloric acid solution, and a concentration range of 3.5 mol/L or more and 9.0 mol/L or less is preferable in the case of using a sulfuric acid solution.

### [Back Extraction Step]

In the back extraction step S63, the impurity elements are back-extracted from the organic solvent into which the impurity elements are extracted. In this back extraction step S63, water or an acid solution having a low concentration is mixed with the organic solvent as a back-extraction solution (starting liquid for back extraction) to conduct the reverse reaction of the reaction at the time of extraction and to obtain an extracted and separated liquid containing the impurity elements.

Water may be used as the starting liquid for back extraction, but there is a possibility that the phase separation between water and the organic phase is poor. Hence, it is preferable to use an acid solution having a low concentration as the starting liquid for back extraction. As the acid solution, a sulfuric acid solution having a concentration of about less than 3.5 mol/L can be used.

Incidentally, it is also possible to conduct a sulfuric acid double salt precipitating step instead of the solvent extraction step S6 although it is not illustrated. The sulfuric acid double salt precipitating step includes a precipitation step of adding a crystal of sodium sulfate to the scandium-containing acidic solution to generate a precipitate of sulfuric acid double salt, a neutralization step of neutralizing a solution obtained by dissolving the precipitate of sulfuric acid double salt with sodium hydroxide or the like, and a redissolution step of redissolving scandium hydroxide obtained by neutralization to obtain a solution. The impurities may be removed by such a treatment to generate a precipitate of sulfuric acid double salt.

### <Scandium Precipitating Step>

Next, in the scandium precipitating step S7, a precipitate of scandium oxalate is generated from the raffinate which contains scandium and is obtained in the solvent extraction step S6.

The aspect of the treatment in the scandium precipitating step S7 is not particularly limited as long as a precipitate of scandium oxalate can be generated, but it is possible to use the extracted and separated liquid obtained in the solvent extraction step S6 as a starting liquid for oxalate formation and to conduct a treatment to deposit and precipitate a white crystal solid of scandium oxalate by adding oxalic acid to the starting liquid for oxalate formation, for example, as an example is illustrated in Fig. 2.

The amount of oxalic acid added is not particularly limited, but it is preferably an amount to be 1.05 times or more and 2.0 times or less the equivalent required to deposit scandium in the starting liquid for oxalate formation as an oxalic acid salt. When the added amount is less than 1.05 times the equivalent required for deposition, there is a possibility that the entire amount of scandium cannot be recovered. Meanwhile, when the added amount exceeds 2.0 times the equivalent required for deposition, scandium is redissolved and the recovery rate thereof decreases as the solubility of scandium oxalate increases or the amount of an oxidizing agent such as hypochlorine soda to be used in order to decompose excessive oxalic acid increases.

The pH of the starting liquid for oxalate formation when conducting the reaction for oxalate formation is not particularly limited, but it is preferably about 0 or higher and 2 or lower and still more preferably about 1. When the pH is lower than 0 to be too low, there is a possibility that the solubility of scandium oxalate increases and the recovery rate of scandium decreases. Meanwhile, when the pH exceeds 2, impurities contained in the extracted and separated liquid also form a precipitation to cause a decrease in scandium purity.

By conducting the respective steps as described above, it is possible to produce scandium oxalate to be a raw material for production of scandium oxide.

Here, sulfur-containing compounds such as calcium sulfate are contained in scandium oxide thus obtained as impurities in the course of scandium oxide production. In this regard, according to the method for producing scandium oxide according to the present embodiment, it is possible to effectively remove sulfur components contained in scandium oxalate since scandium oxide is produced by adding a compound to be a carbon source to scandium oxalate to be a raw material and subjecting scandium oxalate to a heat treatment at the same time. This makes it possible to efficiently produce high purity scandium oxide having a suppressed sulfur content.

### EXAMPLES

Hereinafter, the present invention will be described more specifically with reference to Examples of the present invention and Comparative Examples. Incidentally, the present invention is not limited to the following Examples at all.

### [Example 1]

### (Preparation of Scandium Oxalate of Raw Material)

First, scandium oxalate to be a raw material for production of scandium oxide was prepared.

Specifically, a nickel oxide ore was used as a raw material and subjected to a known HPAL process to obtain a leachate into which nickel and scandium were leached, slaked lime was then added to the leachate thus obtained to conduct a neutralization treatment and to separate impurities from the leachate. Subsequently, a sulfurizing agent was added to the leachate from which impurities had been separated to conduct a sulfurization treatment and thus to separate most impurities and nickel as a sulfide.

Next, a scandium eluate was obtained by conducting a known ion exchange treatment to adsorb the scandium ions in the solution after the sulfurization treatment (liquid after sulfurization) to a chelate resin.

Next, the scandium eluate thus obtained was subjected to a known solvent extraction treatment using an amine-based extracting agent. Scandium in the solution was concentrated and an extracted and separated liquid and a raffinate were separated from each other by a method including such an ion exchange treatment and such a solvent extraction treatment in combination. Thereafter, oxalic acid was added to the raffinate to obtain a crystal of scandium oxalate.

After the oxalate formation treatment, the precipitate of scandium oxalate crystal thus obtained was filtered and separated from the filtrate. The precipitate thus separated was subjected to repulping washing using pure water three times and dried for a whole day and night at 105°C by using a vacuum dryer. Here, the grade of sulfur in the scandium oxalate crystal thus obtained was 50 ppm.

### (Production of Scandium Oxide)

Next, scandium oxide was produced by using the precipitate of scandium oxalate as a raw material.

Specifically, 20 g of the precipitate of scandium oxalate thus obtained and 200 g of high purity carbon (C: 16.7 mol) were put in separate quartz boats and the quartz boats were placed in the same tube furnace in which a quartz tube was set. Thereafter, the air was allowed to flow into the quartz tube at a flow rate of 0.1 L/min and the internal temperature was raised to 1100°C over 3 hours. After the internal temperature reached 1100°C, a heat treatment was conducted by keeping the internal temperature at 1100°C for 2 hours while continuously allowing the air to flow. Incidentally, the amount of oxygen present in the quartz tube at this time was 0.016 equivalent of the equivalent required to oxidize the entire carbon of a carbon source to carbon dioxide.

Thereafter, the resultant was cooled to room temperature, scandium oxide crystals remaining in the quartz boat after cooling were recovered, and the content of the sulfur component therein as an impurity was analyzed.

The masses of the oxalic acid compound and high purity carbon before and after the heat treatment, mass decreases thereof, the sulfur content in scandium oxide obtained after the heat treatment, and the value of sulfur content expressed in terms of sulfate radical (SO₄) in Example 1 are presented in the following Table 1.

**[Table 1]**

| Sc oxalate [g] | Sc oxide [g] | Mass decrease before and after heating [g] | High purity carbon | | | In Sc oxide | |
|---|---|---|---|---|---|---|---|
| | | | Before heating [g] | After heating [g] | Mass decrease [g] | Content of S [ppm] | Content of SO₄[ppm] |
| 20.85 | 7.19 | 13.66 | 200.28 | 195.63 | 4.65 | <10 | <30 |

As can be seen from the results in Table 1, it was possible to decrease the content of sulfur in scandium oxide to a value lower than the detection limit value in Example.

### [Comparative Example 1]

In Comparative Example 1, scandium oxide was produced by conducting a heat treatment in the same manner as in Example 1 except that high purity carbon was not placed in the tube furnace at the time of heating of scandium oxalate.

The sulfur content in scandium oxalate before the heat treatment and the sulfur content in scandium oxide obtained after the heat treatment in each of Example 1 and Comparative Example 1 are presented in the following Table 2.

**[Table 2]**

| | Gas atmosphere | High purity carbon | Content of S in Sc oxalate [ppm] | In Sc oxide | |
|---|---|---|---|---|---|
| | | | | Content of S [ppm] | Content of SO₄ [ppm] |
| Example1 | Air | Presence | 50 | <10 | <30 |
| Comparative Example1 | Air | Absence | 50 | 40 | 120 |

As can be seen from the results in Table 2, sulfur remained in scandium oxide at 40 ppm and sulfur was not sufficiently removed in Comparative Example 1.

As described above, it has been found that it is possible to effectively remove the sulfur component contained in scandium oxalate and to obtain scandium oxide having a higher purity and a decreased grade of sulfur by conducting a heat treatment in a state of containing a carbon source together with scandium oxalate when conducting the heat treatment.

## Claims

1. A method for producing scandium oxide, the method comprising heating scandium oxalate containing a sulfur-containing compound as an impurity in an oxygen-containing atmosphere in a state of containing a carbon source, which contains carbon and generates carbon monoxide by combustion, together with the scandium oxalate, **characterized in that** an amount of oxygen present at the time of the heating is less than an amount required to oxidize all carbon atoms contained in the carbon source to carbon dioxide.

2. The method for producing scandium oxide according to claim 1, wherein the scandium oxalate is a precipitate obtained by adding oxalic acid to a solution which contains scandium and exhibits acidity by sulfuric acid.

3. The method for producing scandium oxide according to claim 2, wherein the solution which exhibits acidity by sulfuric acid is a solution obtained by adding a neutralizing agent to a leachate obtained by leaching a nickel oxide ore with sulfuric acid.

## Patentansprüche

1. Verfahren zur Herstellung von Scandiumoxid, wobei das Verfahren umfasst:
Erhitzen von Scandiumoxalat, das eine schwefelhaltige Verbindung als Verunreinigung enthält, in einer sauerstoffhaltigen Atmosphäre in einem Zustand, bei dem eine Kohlenstoffquelle, die Kohlenstoff enthält und durch Verbrennung Kohlenmonoxid erzeugt, zusammen mit dem Scandiumoxalat enthalten ist,
**dadurch gekennzeichnet, dass**
eine Menge an Sauerstoff, die zum Zeitpunkt des Erhitzens vorliegt, geringer ist als eine Menge, die erforderlich ist, um alle Kohlenstoffatome, die in der Kohlenstoffquelle enthalten sind, zu Kohlendioxid zu oxidieren.

2. Verfahren zur Herstellung von Scandiumoxid nach Anspruch 1, wobei das Scandiumoxalat als Ausfällungsprodukt vorliegt, das durch Zugeben von Oxalsäure zu einer Lösung, die Scandium enthält und durch Schwefelsäure saure Eigenschaften zeigt, erhalten wurde.

3. Verfahren zur Herstellung von Scandiumoxid nach Anspruch 2, wobei es sich bei der Lösung, die durch Schwefelsäure saure Eigenschaften zeigt, um eine Lösung handelt, die erhalten wurde durch Zugeben eines Neutralisierungsmittels zu einem Auslaugungsprodukt, das durch Auslaugen eines Nickeloxiderzes mit Schwefelsäure gebildet wurde.

## Revendications

1. Procédé pour produire de l'oxyde de scandium, le procédé comprenant le chauffage d'oxalate de scandium contenant un composé contenant du soufre en tant qu'impureté dans une atmosphère contenant de l'oxygène dans un état contenant une source de carbone, qui contient du carbone et génère du monoxyde de carbone par combustion, conjointement avec l'oxalate de scandium, **caractérisé en ce que** la quantité d'oxygène présent au moment du chauffage est inférieure à la quantité requise pour oxyder tous les atomes de carbone contenus dans la source de carbone en dioxyde de carbone.

2. Procédé pour produire de l'oxyde de scandium selon la revendication 1, dans lequel l'oxalate de scandium est un précipité obtenu par addition d'acide oxalique à une solution qui contient du scandium et présente une acidité du fait de la présence d'acide sulfurique.

3. Procédé pour produire de l'oxyde de scandium selon la revendication 2, dans lequel la solution qui présente une acidité du fait de la présence d'acide sulfurique est une solution obtenue par addition d'un agent neutralisant à un lixiviat obtenu par lixiviation d'un minerai d'oxyde de nickel avec de l'acide sulfurique.
